# EUROPEAN PATENT APPLICATION

(11) **EP 4 497 562 A1**
(43) Date of publication of application: **29.01.2025**
(21) Application number: 24189742.0
(22) Date of filing: 19.07.2024
(51) Int. Cl.: B29C 35/08, B29C 35/12, B29C 44/44, B29C 44/60, B29C 67/20, B29D 35/00

(54) **A METHOD AND DEVICE FOR PRODUCING A PARTICLE FOAM PART FROM FOAM PARTICLES FOR SPORTS APPAREL, SPORTS EQUIPMENT OR A BALL, A METHOD FOR CALIBRATING A PROCESS FOR PRODUCING PARTICLE FOAM PARTS FROM FOAM PARTICLES FOR SPORTS APPAREL, SPORTS EQUIPMENT OR A BALL, A PARTICLE FOAM PART FROM FOAM PARTICLES FOR SPORTS APPAREL, SPORTS EQUIPMENT OR A BALL, AND A SHOE**

(30) Priority: 24.07.2023 DE 102023206994
(71) Applicant: adidas AG, 91074 Herzogenaurach (DE)
(72) Inventor: DREXLER, Maximilian, 91074 Herzogenaurach (DE); LE, Tru, 91074 Herzogenaurach (DE); DYCKMANS, Christoph, 91074 Herzogenaurach (DE); ROMANOV, Victor, 97877 Wertheim (DE); REUBER, Norbert, 97851 Bergrothenfels (DE)
(74) Representative: Bardehle Pagenberg Partnerschaft mbB Patentanwälte Rechtsanwälte

(57) **Abstract**

The invention relates to a method for producing a particle foam part from foam particles for sports apparel, sports equipment or a ball using electromagnetic waves, comprising the steps of filling a mold cavity (14), heating the foam particles with electromagnetic waves in order to weld them, demolding, wherein a parameter characteristic of the absorption of the electromagnetic waves is monitored during the heating of the foam particles, and if this parameter changes by a predetermined amount, the heating of the foam particles is ended. This method ensures in a simple manner that the correct quantity of heat is supplied to the foam particles.

## Description

### 1. Technical Field

The present invention relates to a method and a device for producing a particle foam part from foam particles for sports apparel, sports equipment or a ball, a method for calibrating a process for producing particle foam parts from foam particles for sports apparel, sports equipment or a ball, a particle foam part from foam particles for sports apparel, sports equipment or a ball, and a shoe.

### 2. Prior Art

WO 2013/05081 A1 discloses a method for producing particle foam parts, in which a mixture of foam particles and dielectric transfer liquid is heated by means of electromagnetic waves in order to fuse the foam particles to form a particle foam part. Radio waves or microwaves are used as electromagnetic waves. The material of the foam particles is formed from polypropylene (PP).

US 3,060,513 A discloses a method for sintering moist thermoplastic foam particles. The particles are dielectrically heated and simultaneously compressed in the mould. Electromagnetic waves are applied at a frequency of about 2 to 1000 MHz.

A similar method is described in US 3,242,238 A, in which foam particles are moistened with an aqueous solution and exposed to an electromagnetic field having a frequency of about 5 to 100 MHz.

GB 1,403,326 A describes a method for welding expandable polystyrene foam particles, in which the particles are moistened with an aqueous solution and exposed to an electromagnetic field of 5 to 2000 MHz.

WO 01/64414 A1 discloses a further method in which polymer particles of polyolefins which are wetted with a liquid medium are heated with electromagnetic waves, in particular microwaves. In this case, the temperature in the molding tool is regulated by controlling the pressure present therein.

In the methods explained above, in each case moist foam particles are heated with electromagnetic waves, the electromagnetic energy being absorbed by the liquid and transferred to the particles.

US 5,128,073 A discloses thermoplastic particles which are coated with a material which absorbs high-frequency energy. These particles can be heated with electromagnetic waves, the coating releasing the electromagnetic energy and releasing it onto the foam particles. Electromagnetic waves in the range of 40 MHz to 2450 MHz are used to weld the foam particles.

These methods have been known for decades. Nevertheless, they have not been successful in practice. There are various reasons for this. In laboratory samples, these methods work very well.

In practice, therefore, foam particles are welded almost exclusively by means of saturated dry steam, as is known, for example, from WO 2014/128214 A1. Compared to welding with steam, welding by means of electromagnetic waves has never been successful in practice in recent decades, although the welding of electromagnetic waves would have considerable advantages due to the principle. In the case of electromagnetic waves, the energy could be transferred in a much more targeted manner, whereby it would not be necessary to heat auxiliary bodies. When steam is used, it must first be generated in a steam generator. Then, the steam must be supplied to the tool via lines. All of these parts must be heated to a sufficiently high temperature, so that the steam does not condense therein. This causes a considerable heat loss. In addition, the devices for steam generation and steam line take up the most installation space on the device for producing the particle foam part. If no steam were required for welding the foam particles, then the entire device could be formed in a much more compact manner.

The transition to industrial production has only recently been successful for the applicant of the present patent application. He has first recognized that a significant reason for the attempts to weld foam particles with electromagnetic waves, which have been unsuccessful for decades, is that the heat cannot be introduced uniformly into the foam particles. As a result, uniform welding in the particle foam part is not obtained.

Methods and devices for producing particle foam parts which bring about uniform heat distribution in the mold space are disclosed in WO 2017/125410 A1, WO 2017/125412 A1, WO 2018/100154 A2, WO 2021/073924 A1 and WO 2022/229030 A1.

In particular, WO 2018/100154 A2 discloses a device for producing particle foam parts, comprising a molding tool which delimits a molding space, wherein at least two capacitor plates are arranged adjacent to the molding space, which capacitor plates are connected to a radiation source for electromagnetic radiation, wherein the radiation source for electromagnetic radiation is designed to emit electromagnetic radiation. This device is provided with a voltage measuring device with which the voltage applied to the capacitor can be measured. This voltage measuring device is used to tune an oscillating circuit which is designed with a generator for electromagnetic waves and therefore the electrical power supplied to the capacitor.

WO 2023/152 056 A1 relates to a computer-implemented method for controlling and/or monitoring at least one particle foam molding process. Here, input parameters are provided which comprise at least one simulation model, material-specific parameters of the foam particles and parameters of the particle foam molding machine. The input parameters are used to simulate a particle foam molding process, whereby at least one process parameter is determined. A particle foam molding process is carried out based on the at least one process parameter. The properties of the molded particle foam part are examined and compared with optimum properties. If the properties deviate from the optimum properties, the at least one process parameter is adjusted. Further particle foam molding processes are carried out until the properties of the molded particle foam part sufficiently match the optimum properties. At least one actual process parameter of the particle foam molding process is then determined and compared with the at least one process parameter of the simulation in order to adapt the simulation model accordingly. Welding can be carried out using different methods, including welding with electromagnetic radiation, in particular with radio radiation, or with hot steam.

WO 2016/083 464 A1 describes a method for controlling a step of a process carried out automatically with a machine (for producing a particle foam part). A sensor is used to measure a variable that is characteristic of a step and has an exponential curve. A time constant of the exponential change is determined based on a plurality of successive measurements of the characteristic quantity, and the step is terminated after it has been performed for a time corresponding to a predetermined multiple of the time constant. The characteristic variable can be the temperature in the mold space. Hot steam is used to weld the foam particles.

DE 10 2019 215 845 B4 shows a process for the production of foamed particle parts, in particular for the production of shoe soles. The foamed particles are welded by means of electromagnetic waves. At least one mold half is made of a material that is transparent to electromagnetic waves and has a partition wall and one or more supports to form several mold spaces. One or more trimming bodies or a trimming fluid are provided in order to influence the electromagnetic field in the mold space.

DE 10 2013 217 864 A1 describes a method for treating hydraulically bonded construction materials and a treatment device. A hydraulically bound binder, such as cement, and a building material mixture containing water are heated by means of electromagnetic radiation. The energy of the electromagnetic radiation is changed as a function of chemical reactions within the building mixture.

EP 1 508 420 A2 shows a process for vulcanizing latex foam and a device for this purpose. The foam is filled into a mold made of electrically non-conductive material and heated by means of electromagnetic waves. During heating, the temperature of the foam is continuously measured and heating is stopped when a preset temperature is reached.

The invention is based on the object of providing a method and a device for producing a particle foam part from foam particles for sports apparel, sports equipment or a ball, and a method for calibrating a process for producing particle foam parts from foam particles for sports apparel, sports equipment or a ball, with which a reliable industrial production of particle foam parts from foam particles for sports apparel, sports equipment or a ball and a shoe is possible by welding the foam particles by means of electromagnetic waves, wherein particle foam parts from foam particles for sports apparel, sports equipment or a ball are obtained with high quality.

### 3. SUMMARY OF THE INVENTION

The object is achieved by the subject matter of the independent patent claims. Advantageous embodiments are specified in the respective dependent claims.

According to a first aspect, the invention relates to a method for producing a particle foam part from foam particles for sports apparel, sports equipment or a ball, in particular with use, comprising the steps of
- filling a molding space,
- heating the foam particles with electromagnetic waves to weld them,
- demolding.

The method is characterized in that a parameter characteristic of the absorption of the electromagnetic waves is monitored during the heating of the foam particles, and if this parameter changes by a predetermined amount, the heating of the foam particles is ended.

The present invention is based on the knowledge that, with the melting of a material of foam particles to be welded, the absorption capacity of the material improves abruptly. It has long been known that polar molecules or polar functional groups absorb electromagnetic waves by being excited to vibrate by the electromagnetic waves. During the melting of a material, the connections between the molecules become detached, so that the individual molecules or their functional groups are more easily movable. In the case of materials, such as PEEK, for example, which have polar functional groups but which are firmly incorporated in the molecular structure, the polar functional groups cannot move, and the material hardly absorbs electromagnetic waves. To absorb electromagnetic waves, it is therefore necessary for the polar functional groups to be movable so that they can vibrate. In the case of a very high mobility of the polar functional groups, they cause no friction or only slight friction, so that the electromagnetic waves can be absorbed only slightly. There is therefore generally a peak region in which the respective materials can absorb electromagnetic waves well. Since the mobility of the functional groups is temperature-dependent, the absorption capacity of electromagnetic waves is generally also temperature-dependent.

Furthermore, the inventors of the present invention have recognized that a problem when welding foam particles for sports apparel, sports equipment or a ball with electromagnetic waves is that the heat not only has to be distributed uniformly in the molding space, but also has to be metered exactly. When welding foam particles with steam, in the case of insufficient welding, steam can be supplied for a relatively long time, so that all regions of the particle foam part are sufficiently welded. Since the temperature of the steam is limited, overheating can never occur. This is also one reason why the welding of foam particles with electromagnetic waves has not been successful in the past compared to welding with steam.

The supply of heat should therefore be interrupted during welding with electromagnetic waves when the material to be welded has melted. Once the foam particles have melted, they combine during cooling to form the particle foam part, which is referred to as welding. Further heating is not necessary, but rather harmful, since the material is then heated to relatively high temperatures and can burn.

The fact that, during melting, the absorption capacity for electromagnetic waves of the material changes, which generally takes place abruptly, is used according to the invention to adjust the duration of the heating. As a result, exact metering of the heat to be supplied is achieved in a very simple manner, which brings about good welding and reliably prevents burning of the material.

The foam particles for sports apparel, sports equipment or a ball to be welded by the method to form particle foam parts are preferably foam particles from a thermoplastic material. This thermoplastic material may be, inter alia, expanded polyurethane (ePU), polyether block amide (PEBA) or expanded polyethylene (ePE). These are polar plastics which absorb electromagnetic waves and, during melting, exhibit a very strong change in the absorption capacity of electromagnetic waves.

Foam particles from apolar plastic, such as, for example, based on expandable polypropylene (ePP) or expandable polystyrene (ePS), can also be welded to form particle foam parts. Since these materials have no polar groups, they absorb electromagnetic radiation only to a very small extent. It is therefore expedient to add a dielectric heat transfer medium, such as, for example, water. Small quantities of water which wet the surface are sufficient. The water can be added in liquid form or as steam. Water molecules form a dipole, so that they absorb electromagnetic waves well and heat up rapidly when electromagnetic waves are radiated. Even if the water is added in foam particles in the form of steam, at least some of the water condenses on the surface of the foam particles and forms a liquid film. If the water is added in liquid form, it is then present in liquid form before the heating of the foam particles with electromagnetic waves and generally also forms a film on the surface of the foam particles. When the foam particles are heated with electromagnetic waves, the water is heated and evaporated. The phase transition from liquid water to steam causes a considerable change in the absorption capacity of the electromagnetic waves. If the water is converted completely into steam, then this means that hot steam which is suitable for welding the foam particles is present in the mold space. Since the individual water molecules are freely movable in the steam, they hardly absorb electromagnetic waves in comparison with liquid water. Further heating is no longer necessary. The heating process can be ended.

The foam particles can also be formed from biological materials, such as, for example, industrial popcorn from corn, which is provided or coated with a binder, so that the binder combines the popcorn after heating.

The term "popcorn" in the sense of the present invention comprises in particular all materials which, such as puff corn (Zea mays, convar. Microsperma), explode to high temperatures, if appropriate after corresponding fatting, with rapid heating, by the water present in the seed evaporating abruptly and thus converting the starch contained in the seed into a foam-like consistency. Such behavior is known, inter alia, from quinoa grain, amaranth, rice or also wheat, materials which are based on these base materials are also explicitly referred to and comprised as "popcorn" in the sense of the present invention, the term "popcorn" is not intended to be restricted only to corn and was chosen in particular for reasons of simplicity, clarity and legibility.

The binder may have a thermoplastic which melts on exposure to heat and solidifies on cooling and thus combines the popcorn particles with one another. The binder may also contain glue which reacts chemically on heating and thus combines the popcorn particles with one another.

Suitable binders are in particular thermoplastics, thermosets, amino resins, phenolic resins, isocyanates, proteins, tannins, starch, synthetic binders or natural binders, or mixtures of binders, such as, for example, urea-formaldehyde resin, melamine-formaldehyde resin, melamine-reinforced urea-formaldehyde resin, tannin-formaldehyde resin, phenol-formaldehyde resin, polymeric diphenylmethane-diisocyanate or mixtures thereof.

The proportion of binder in the molded part (in % by weight based on the weight of the molded part) is preferably <10%, preferably <5%.

Biological material generally contains a certain moisture content. This water contained in the biological material absorbs the electromagnetic waves and heats the popcorn particles and the binder. On evaporation of the binder, the absorption capacity of the water for electromagnetic waves changes in the same way as explained above, which in turn can be determined with the characteristic parameter. This is also an indication that the material is heated in the molding space and combines to form a particle foam part.

There are therefore different physical mechanisms of action which cause a change in the absorption capacity of electromagnetic waves. Since the electromagnetic waves heat the material present in the molding space, a strong change in the absorption capacity of electromagnetic waves always indicates a reproducible stage of the heating process. The characteristic parameter is therefore a physical variable which is characteristic of the foam particles to be welded and changes due to the radiation of electromagnetic waves, so that a specific process state or processing state of the foam particles to be welded can be determined on the basis of this change.

The heating process can then be ended in accordance with the change in the characteristic parameter. The ending of the heating process can be carried out directly if the characteristic parameter changes, or it may also be expedient to end the heating process by a predetermined period of time after the change in the characteristic parameter (delayed ending of the heating process). The delay period is material-specific and the value for the delay period can be determined empirically. It has been found that, in the case of most polar plastics materials which melt as a result of the action of the electromagnetic waves, a very short delay period or a delay period of "0" is expedient. In the case of other materials, in particular which form a connection between the foam particles as a result of chemical reaction, a delay period which is greater than "0" may also be expedient.

The electromagnetic waves can be generated by means of a capacitor in which the molding space is located. In this case, the electromagnetic waves can be applied to the capacitor with a predetermined voltage amplitude, and the power introduced into the molding space or the first or second derivative thereof over time can be measured as a characteristic parameter. It is also possible for the electromagnetic waves to be applied to the capacitor with a predetermined power, and the voltage dropped across the capacitor or the first or second derivative thereof over time to be measured as a characteristic parameter.

If the characteristic parameter is monitored directly, it is then checked, in order to establish a change by a predetermined amount, whether the characteristic parameter changes by a predetermined threshold value within a predetermined time interval. This means an abrupt change in the characteristic parameter.

If the first time derivative of the characteristic parameter is monitored, it is then checked, in order to establish a change by a predetermined amount, whether the first time derivative of the characteristic parameter exceeds a predetermined threshold value. This in turn means an abrupt change in the characteristic parameter.

If the second time derivative of the characteristic parameter is monitored, it is then also determined here, in order to establish a change by a predetermined amount, whether the second time derivative exceeds a predetermined threshold value. This means that the change in the profile of the characteristic parameter itself changes very strongly. If the profile of the characteristic parameter is entered in a diagram, exceeding the second time derivative of a specific threshold value means a strong curvature in the profile of the characteristic parameter over time. This also indicates a strong change in the characteristic parameter.

There are therefore different ways in which a strong change in the characteristic parameter can be detected. In order to obtain a signal with which the heating of the foam particles by means of electromagnetic waves is intended to be ended, it is important that this signal is characteristic and reproducible for the respective heating state of the foam particles. This is given in all the methods explained above.

Preferably, the particle foam part generated in the molding space is cooled in the molding space after heating and before demolding. Such a cooling process is also referred to as stabilization.

The electromagnetic waves are preferably RF radiation. The RF radiation has a frequency range of 30 kHz to 300 MHz. In many states, a frequency of 27.12 MHz is available for industrial applications. This is a suitable frequency for heating the foam particles.

The amplitude of the high-frequency voltage applied to the capacitor is preferably in the range of 10³ V to 10⁵ V and in particular in the range of 5×10³ V to 1.5×10⁴ V.

According to a further aspect, the present invention relates to a method for calibrating a process for producing particle foam parts from foam particles for sports apparel, sports equipment or a ball using electromagnetic waves. In this method, a mould which defines a specific molding space and foam particles of a specific material type are used to produce at least one particle foam part for sports apparel, sports equipment or a ball according to one of the methods explained above, in which the heating of the foam particles is controlled or ended on the basis of the characteristic parameter. Further particle foam parts for sports apparel, sports equipment or a ball are then produced by heating the foam particles with the same settings for supplying the electromagnetic waves in each case for a production heating interval which corresponds to the duration determined with the calibration process. These settings are primarily the applied electrical power or the applied electrical voltage.

As a result, a production heating interval which defines the duration during which the foam particles are heated with electromagnetic waves is determined in a calibration process.

Since the suitable duration for heating the foam particles depends on the molding tool and the material type of the respective foam particles, a production heating interval which is individual for this can thus be determined simply and rapidly in order to produce high-quality particle foam parts with this in a simple and reliable manner.

A plurality of particle foam parts for sports apparel, sports equipment or a ball can also be produced during a calibration process, and the duration of the heating can be measured in each case. The production time interval is then determined on the basis of the plurality of durations measured during the calibration process. The mean value or median of the individual durations can be determined as the production time interval.

Furthermore, only durations which lie within a predetermined multiple of the standard deviation around the mean value or around the median of the measured durations can be taken into account in determining the production time interval.

A statistical evaluation of the measured durations can be carried out for determining a quality factor of the production process. The production process can be optimised on the basis of this quality factor by varying a specific parameter of the production process if the quality factor indicates a stability of the production process which is too low.

At least one of the following parameters can be varied and then a production time interval can be determined again according to the calibration process explained above:
- applied power of the electromagnetic waves,
- applied voltage for generating the electromagnetic waves,
- quantity of the heat transfer medium supplied to the molding space,
- quantity of the foam particles supplied to the molding space,
- pressure which is exerted by means of a molding tool on the foam particles before the latter are heated.

The at least one parameter to be changed and the degree of change can be determined automatically by means of an expert system.

According to a further aspect, the invention relates to a device for producing a particle foam part from foam particles for sports apparel, sports equipment or a ball, comprising a molding tool which delimits a molding space, wherein at least two capacitor plates are arranged adjacent to the molding space, which capacitor plates are connected to a radiation source for electromagnetic radiation, wherein the radiation source for electromagnetic radiation is designed to emit electromagnetic radiation, and the device has a control device which is designed in such a way that the device automatically carries out a method explained above.

According to a further aspect, the invention relates to a particle foam part from foam particles for sports apparel, sports equipment or a ball, which has been produced according to one of the abovementioned methods. The particle foam part can be a shoe sole or a part of a shoe sole, in particular a midsole or a part of a midsole.

According to a further aspect, the invention relates to a shoe, in particular a sports shoe, which comprises a shoe sole or a midsole from an abovementioned particle foam part from foam particles for sports apparel.

### 4. BRIEF DESCRIPTION OF THE FIGURES

Possible embodiments of the present invention are described further below with reference to the following figures:
- FIG. 1: shows an exemplary embodiment of a device for producing a particle foam part from foam particles for sports apparel, sports equipment or a ball,
- FIGS. 2 a, 2 b: each show a molding tool in a partially open position (FIG. 2 a) and a closed position (FIG. 2 b) in a sectional illustration,
- FIG. 3: shows a generator for electromagnetic radiation, which forms a tunable oscillating circuit, and the molding tool in an electrical circuit diagram, and
- FIG. 4: shows a control device for controlling the power supply in a circuit diagram.

### 5. DETAILED DESCRIPTION OF POSSIBLE EMBODIMENTS

Possible embodiments of the various aspects of the present invention are described in the following detailed description mainly with respect to methods and devices for producing a particle foam part from foam particles for sports apparel including sports footwear such as shoes and shoe soles. However, it is emphasized that the present invention is not restricted to these embodiments. Rather, it can also be used for various types of sports apparel, sports articles as well as sports equipment and sports gear respectively or a ball, in which at least one part comprises a particle foam part, for example any type of balls or racket such as a tennis racket, golf club, baseball bat, badminton racket, cricket bat, ice hockey stick, hockey stick, squash racket, table tannis racket, or any type of protective apparel in the use of sports such as shin guard, knee or elbow guard, etc.

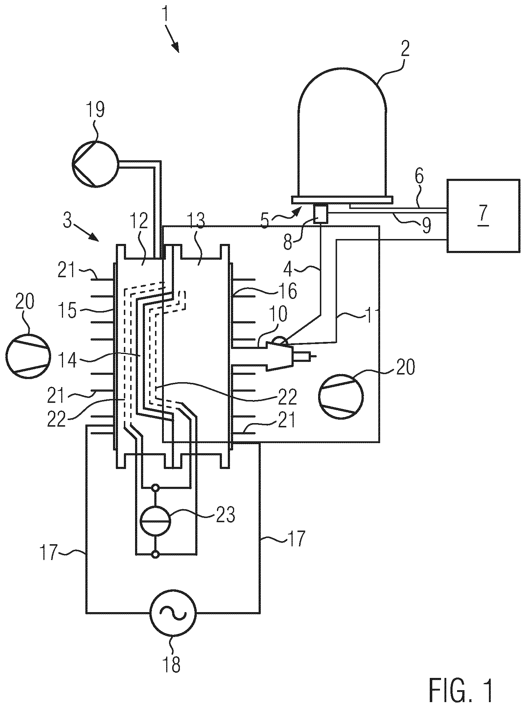

The basic structure of a device 1 for producing a particle foam part from foam particles for sports apparel, sports equipment or a ball is shown in FIG. **1****.** This device 1 comprises a material container 2, a molding tool 3 and a line 4 which leads from the material container 2 to the molding tool 3. The particle foam part is produced from foam particles and is used for sports apparel, sports equipment or a ball.

The material container 2 serves for receiving loose foam particles. The material container 2 has a bottom 5, wherein it is connected in the bottom region via a compressed air line 6 to a compressed air source 7. The compressed air line 6 is connected to a plurality of nozzles (not illustrated) arranged in the bottom 5, so that a plurality of air streams (=fluidizing air) can be introduced into the material container 2, which air streams swirl the foam particles present therein and thereby separate them.

An opening is formed in the region of the bottom 5 of the material container 2, to which opening the conveying line 4 is connected. The opening can be closed by means of a slide (not illustrated).

A drive nozzle 8 is located adjacent to the material container in the conveying line 4. The drive nozzle 8 is connected to the compressed air source 7 by means of a further compressed air line 9. Compressed air supplied to this drive nozzle 8 serves as drive air, since it enters the conveying line 4 through the drive nozzle 8 and flows in the direction of the molding tool 3. As a result, a negative pressure is generated on the drive nozzle 8 on the side facing the material container 2, which negative pressure sucks foam particles out of the material container.

The conveying line 4 opens into a filling injector 10, which is coupled to the molding tool 3. The filling injector 10 is connected to the compressed air source 7 by means of a further compressed air line 11. The compressed air supplied to the filling injector 10 is used, on the one hand, for filling the molding tool 3, in that the flow of foam particles is acted upon by means of the compressed air in the direction of the molding tool 3. On the other hand, the compressed air supplied to the filling injector 10 can also be used for blowing back the foam particles from the conveying line 4 into the material container 2 when the filling operation on the molding tool 3 is concluded.

The molding tool 3 is formed from two mold halves 12, 13. At least one molding space 14, into which the filling injector 10 for introducing the foam particles opens, is delimited between the two mold halves. The volume of the molding space 14 can be reduced by moving the two mold halves 12, 13 together. When the mold halves 12, 13 are moved apart, a gap, which is referred to as crack gap, is formed between the mold halves 12, 13. Therefore, such a molding tool 3 is also referred to as crack gap molding tool.

The device 1 has no steam generator and no steam feed to the molding space 14, as is customary in conventional devices for producing particle foam parts. In the molding space 14, moisture can pass through the residual moisture contained in the material of the foam particles and through the moisture contained in the compressed air. However, the device 1 can also be formed with a steam generator and a steam feed to the molding space 14 and/or to the conveying line 4, in order to supply saturated dry steam to the molding space 14 for additional heating or preheating of the foam particles and/or in order to wet foam particles during their transport from the material container 2 to the molding space 14. The foam particles which are located in the material container 2 can also be wetted with water in liquid form, wherein corresponding nozzles which atomize the water are arranged for this purpose in the material container 2.

A capacitor plate 15, 16 is arranged in each case on the mold halves 12, 13. These capacitor plates are composed in each case of a highly electrically conductive material, such as, for example, copper or aluminum. The filling injector 10 is arranged on the mold half 13. The filling injector 10 extends through a recess in the capacitor plate 16, which recess is attached to the mold half 13.

The capacitor plates 15, 16 are connected to a generator 18 via electrical lines 17 for the transmission of high-frequency voltages. These electrical lines 17 are generally waveguides. In the present exemplary embodiment, the waveguides are formed from a hollow tube having, for example, a rectangular cross section and composed of an electrically conductive material. However, there are also other types of waveguides, such as, for example, coaxial cables, which are basically suitable for connecting the generator 18 to the capacitor plates 15, 16.

The mold halves 12, 13 each have a main body which can be formed from an electrically non-conductive material which is substantially transparent, in particular to electromagnetic RF radiation, such as, for example, polytetrafluoroethylene (PTFE), polyethylene, in particular UHMWPE, polyether ketone (PEEK). Only the capacitor plates 15, 16 are formed to be electrically conductive. The "substantially transparent material" is a material which can be penetrated by electromagnetic radiation, in particular RF radiation. However, this material can be formed in a targeted manner with a certain absorption property for electromagnetic RF radiation in order to convert a portion of the electrical RF radiation into heat and in order to heat the mold halves 12, 13 themselves. This will be explained in more detail below.

Alternatively, one or both mold halves can also form the capacitor plates if they comprise an electrically conductive material, such as, for example, aluminum or steel. However, the two mold halves are basically electrically insulated from one another. Preferably, one of the two mold halves is formed to be electrically conductive and the other mold half is formed to be non-electrically conductive. The electrically conductive mold half can be three-dimensionally contoured, such that it forms a corresponding three-dimensionally contoured surface on the particle foam part. The electrically conductive mold half brings about a smooth or predetermined exact texture of the surface and is therefore preferably used to produce a visible surface on the particle foam part.

The molding tool can optionally be connected to a negative pressure pump 19, such that a negative pressure or vacuum can be applied to the molding space 14. This negative pressure leads to moisture contained in the molding space 14 being drawn off.

The capacitor plates 15, 16 are preferably provided with a cooling device. In the present exemplary embodiment, the cooling device is formed by fans 20 which direct cooling air onto that side of the capacitor plates 15, 16 which faces away from the molding space 14. In order to increase the cooling action, cooling fins 21 can be provided on the capacitor plates 15, 16.

Alternatively or additionally, temperature control lines can also be arranged on the capacitor plates 15, 16, through which temperature control lines a temperature control medium is guided. A liquid, such as, for example, water or oil, is preferably used as the temperature control medium.

A method for producing particle foam parts from foam particles for sports apparel, sports equipment or a ball using the above-described device is explained below:
The method comprises the following basic steps:
- filling the molding space 14
- welding the foam particles
- stabilization (optional)
- demolding
- cleaning of the tool (optional)

To fill the molding space 14, air is blown in via the compressed air line 6 in the region of the bottom 5 of the material container, in order to swirl and separate the foam particles present therein. At the same time, drive air is also supplied to the drive nozzle, so that foam particles are sucked out of the material container 2 into the conveying line 4 and transported with the drive air in the direction of the molding tool 3. The molding space 14 is closed, wherein the mold halves 12, 13 can be moved completely together or spaced apart from one another by a crack gap.

The slide of the material container 2 can be successively opened and closed. The opening and closing times are typically in the range of 500 ms to 1 s. As a result of this cyclic opening and closing of the slide, the foam particles from the material container 2 are supplied intermittently to the conveying line 4. As a result, bridging of the foam particles in the material container 2 can be broken open and the foam particles are separated. This is expedient in particular in the case of foam particles with an adhesive surface, such as, for example, eTPU foam particles.

Intermittent suction can also alternatively occur by means of intermittent supply of the drive air from the compressed air line 9 to the drive nozzle 8 arranged directly adjacent to the material container 2.

The molding tool 12, 13 is provided with at least one valve (not illustrated) which is opened during the supply of foam particles, so that the compressed air flowing into the molding space 14 can escape. This valve can be set during the filling of the molding space 14 in such a way that a counterpressure forms in the molding space 14. As a result, the pressure in the conveying line and in the molding space 14 can be kept high, whereby the foam particles are kept at a small volume. This makes it possible for more foam particles to be supplied to the molding space 14 than would be possible without application of the counterpressure. After the counterpressure has been withdrawn, the foam particles expand in the molding space 14.

A further parameter for setting the filling quantity is the crack gap, i.e. the gap with which the two mold halves 12, 13 are arranged spaced apart from one another during the filling. The use of a crack gap during the filling increases above all the density in a thin region of the particle foam part to be produced.

As soon as it is established that the molding space 14 is filled with foam particles, the filling injector 10 is closed. The foam particles present in the line are blown back into the material container 2 with the compressed air supplied to the filling injector 10.

The filling of the molding space 14 with foam particles is described in detail in the German patent application DE 10 2014 117 332 A1, for which reason reference is made in this respect to this patent application.

After the filling of the molding space 14 with foam particles, they are heated by application of electromagnetic RF radiation. This RF radiation is generated by a high-frequency voltage of about 10⁴ V with a frequency of 27.12 MHz being applied to the capacitor plates 15, 16.

The electromagnetic RF radiation preferably has a frequency of at least 30 kHz or at least 0.1 MHz, in particular at least 1 MHz or at least 2 MHz, preferably at least 10 MHz.

The electromagnetic RF radiation preferably has a frequency of at most 300 MHz.

The foam particles for sports apparel, sports equipment or a ball may be formed on the basis of polyurethane (eTPU). Polyurethane has a dielectric loss factor D of 0.2 in the case of electromagnetic radiation having a frequency of 1 MHz. In contrast, the dielectric loss factor of polypropylene (PP) in the case of electromagnetic radiation having a frequency of 1 MHz is only 0.00035. The absorptivity of polyurethane is therefore substantially higher than that of polypropylene. As a result, it is possible, without additional heat-transferring substances, in particular without aqueous solutions, to introduce the heat necessary for welding the foam particles into the mold space 14, since the foam particles themselves absorb the electromagnetic waves.

Instead of foam particles based on polyurethane, foam particles based on polyether block amide (PEBA) or based on polyethylene (PE) can also be used.

Foam particles based on ePP (expandable polypropylene) or ePS (expandable polystyrene) can also be welded to form particle foam parts. Since these materials absorb electromagnetic radiation only to a very small extent, it is expedient to add a dielectric heat transfer medium, such as, for example, water. The foam particles can be wetted with the heat transfer medium in the material container 2 or during their transport from the material container 2 to the molding tool 3. Wetting in the line 4 has the advantage that the foam particles are wetted very uniformly and the heat transfer medium is distributed uniformly in the mold space 14. This leads to correspondingly uniform heating of the foam particles in the mold space 14.

The molding tool 3 can also be connected to a steam source (not illustrated), by means of which saturated dry steam can be supplied to the molding space 14. This is expedient when materials are welded in which the dielectric loss factor is temperature-dependent. Such materials are, for example, ePES (expandable polyethersulphone) or expandable polyamide. At low temperatures, the absorption property of electromagnetic waves is low. Therefore, these foam particles are firstly heated by means of the steam, in order then to be heated to even higher temperatures from a specific temperature alone or additionally by means of electromagnetic radiation. Alternatively, the foam particles can be wetted with a dielectric heat transfer medium, so that the dielectric heat transfer medium is heated by means of electromagnetic radiation, in order to heat the foam particles to a predetermined temperature. Thereafter, direct heating of the foam particles can occur due to the electromagnetic radiation, since the absorption properties of electromagnetic radiation increase with increasing temperature.

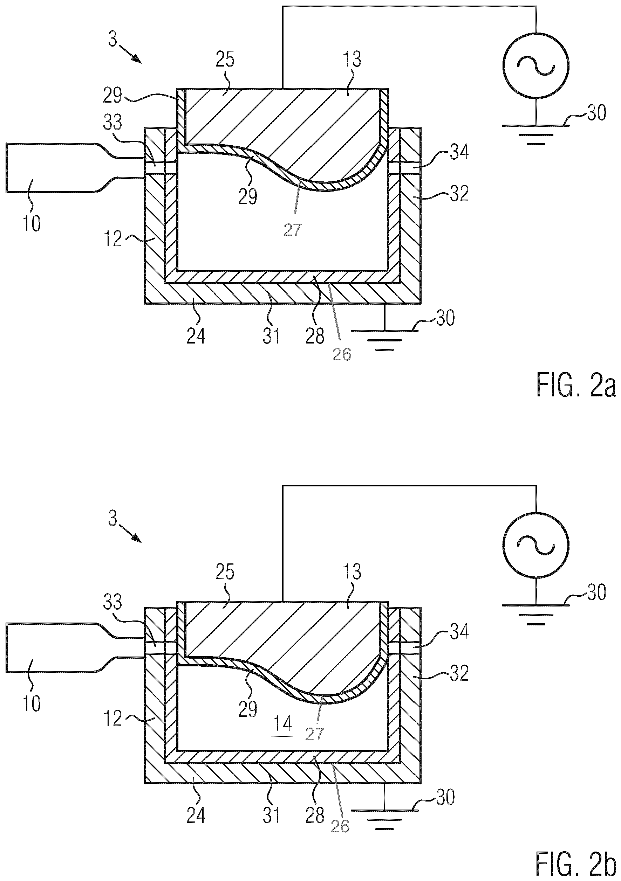

A molding tool 3 (**FIG. 2 a,** **FIG. 2** **b**) is explained below, which in each case has a first mold half 12 and a second mold half 13 and can be used in the above-described device 1. Movement devices, holding elements, thermometers for measuring the temperature in the mold space and further mechanical parts for opening and closing the tool are omitted in FIG. 2 a, 2 b for a simpler graphical representation.

The molding tool 3 is formed from two mold halves 12, 13 which each have a main body 24, 25 composed of an electrically conductive material. These main bodies are composed, for example, of aluminum, copper or a highly electrically conductive alloy.

The two mold halves 12, 13 delimit a molding space 14 by means of an inner delimiting surface 26, 27. The inner delimiting surfaces 26, 27 of the two mold halves 12, 13 are provided with an electrically insulating coating 28, 29.

The electrically insulating coatings can be formed from a material which is substantially transparent to electromagnetic radiation, in particular RF radiation, such as, for example, PTFE, PE, PEEK. However, they can also be formed from a plastic material which has a dielectric loss factor which is similar to that of the plastic material to be processed in the molding space 14 in the case of the electromagnetic radiation applied, in order thus to achieve uniform heating over the entire molding space 14 and at the edge region of the molding space during application of the electromagnetic radiation. For this purpose, the coating 28, 29 is preferably formed from a material having a moderate loss factor, such as, for example, PET (polyethylene terephthalate), PEEK (polyether ketone), POM (polyoxymethylene), polyimide and PMMA (polymethyl methacrylate). These coatings 28, 29 are therefore substantially transparent to RF radiation, since they absorb only a small proportion of the electromagnetic radiation and can be formed with a certain thickness of, for example, at least 2 mm, in particular at least 2.5 mm or at least 5 mm, on account of the relatively low loss factor. The coating is preferably not thicker than 20 mm, in particular not thicker than 15 mm and preferably not thicker than 10 mm, so that the proportion of the electromagnetic wave energy absorbed by the coating is small.

The electrically conductive main bodies 24, 25 form the capacitor plates of the molding tool 3. They therefore have an electrical connection in order to be able to be connected to the generator 18 or to ground 30. The generator 18 represents a radiation source for generating electromagnetic radiation. Preferably, the generator is formed for generating RF radiation. The generator can also be formed for generating microwave radiation, wherein substantially more uniform heating is possible with RF radiation than with microwave radiation in the case of larger mold spaces 14. In addition, most plastics materials can absorb RF radiation substantially better than microwave radiation. The use of RF radiation is therefore preferred.

Since the mold halves 12, 13 both delimit the molding space 14 and simultaneously form the capacitor plates, the distance between the "capacitor plates" and the molding space 14 is very small and is determined solely by the electrically insulating coatings 28, 29. As a result, the losses of electromagnetic radiation are very low, whereby the proportion of the power which is introduced into the foam particles to be welded as heat is very high. Such a tool therefore allows very efficient welding of the foam particles to form a particle foam part for sports apparel, sports equipment or a ball.

In the present exemplary embodiment of the molding tool 3, the first mold half 12 has a base wall 31 and a circumferential side wall 32. In the present exemplary embodiment, both the base wall 31 and the side wall 32 are formed from the electrically conductive main body 24 and the coating 28 arranged on the inside. It is also possible for the side wall 32 to be formed solely from a non-electrically conductive material, in particular plastic material, or to be formed only partially by means of the electrically conductive main body 24. The second mold half 13 forms a plunger which can move into the cavity formed by the first mold half 12 and thus tightly closes off the molding space 14. The tight closure between the two mold halves 12, 13 is at least so tight that foam particles present therein cannot escape. The molding space 14 is not necessarily closed off in a gas-tight manner.

The two mold halves 12, 13 can be moved relative to one another by means of a press (not illustrated) and can be acted upon with a predetermined force.

A passage opening for supplying foam particles, which is referred to below as filling opening 33, is arranged on the first mold half 12. The filling injector 10 is connected to the filling opening 33. This filling injector 10 differs from conventional filling injectors since it does not have a closing mechanism for closing the filling opening 33, as will be explained in more detail below.

The first mold half 12 has one or more passage openings for escaping air, which are referred to below as venting opening 34.

The filling opening 33 and the venting openings 34 are arranged on a section or region, in particular an edge region, of the first mold half 12, which is covered or covered by the second mold half 13 in the closed state of the molding tool 3 (FIG. 2 b). As a result, the filling opening 33 and the venting opening 34 are automatically closed when the molding tool 3 is closed by introducing the second molding tool 13 into the cavity formed by the first molding tool 12. As a result, it is not necessary for the filling injector 10 to have a closing mechanism with which the filling opening 33 is closed.

This section or region is the region of the first mold half 12, which is not covered by the second mold half 13, is the region by which the mold halves are opened when moving apart into the crack gap position.

Preferably, the first mold half 12 is connected to ground 30. The filling injector 10 is coupled to the electrically conductive main body 24 of the first mold half 12, so that the filling injector 10 is also electrically connected to the ground 30. The generator 18 generates electromagnetic waves or an electrical alternating voltage with respect to the ground 30, which is applied to the main body 25 of the second mold half 13. As a result, an electromagnetic alternating field, in particular RF radiation, is formed in the molding space 14.

In such an embodiment of the molding tool 3, it is important that the electrically conductive main bodies 24, 25 of the two mold halves 12, 13 are electrically insulated from one another. In the present exemplary embodiment, this is achieved by means of the coatings 28, 29.

Preferably, the inner delimiting surface 26, 27 of one of the two mold halves 12, 13 is formed to be contoured. Contoured in the sense of the present invention means any shape which deviates from a planar delimiting surface. In the present exemplary embodiment, the inner delimiting surface 27 of the second mold half 13 is contoured. The inner delimiting surface 26 of the first mold half 12 is not contoured in the region of the base wall 31.

Such a molding tool 3 furthermore differs from known molding tools for welding foam particles by means of electromagnetic waves in that the second molding tool 13 is formed in the manner of a plunger and is located with its electrical main body 25 at least partially within the cavity delimited by the first mold half 12 and therefore the electrically conductive main body 25, which functions as a capacitor plate, is located very close to the molding space 14 or to the foam particles to be welded.

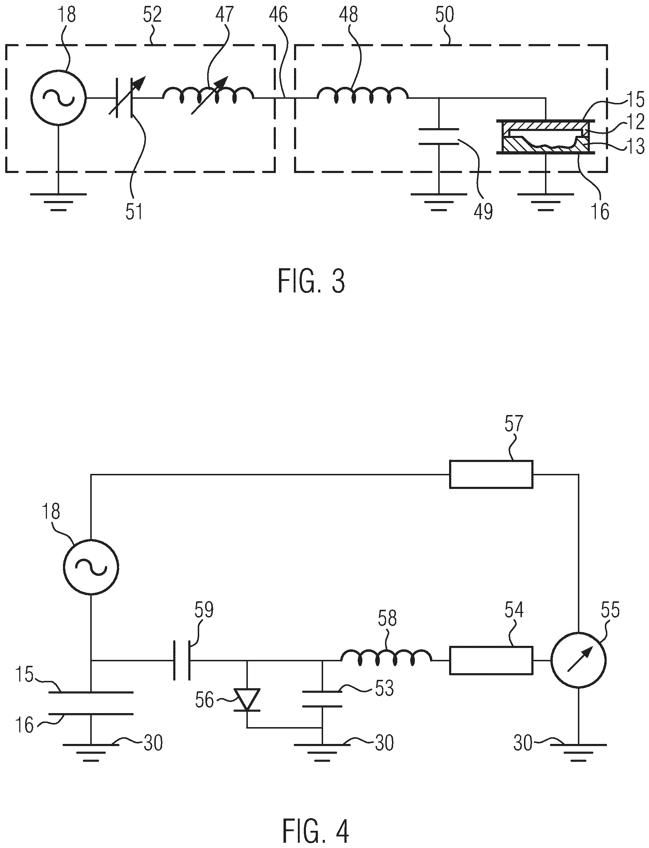

FIG. 3 shows schematically in an electrical circuit diagram the generator 18, the tool capacitor formed by the capacitor plates 15, 16, which surrounds the mold halves 12, 13, and a line (hollow waveguide or coaxial line) 46 which is suitable for transmitting the electromagnetic waves and by means of which the electromagnetic waves are transmitted from the generator 18 to the tool capacitor 15, 16. Preferably, the hollow waveguide forming the line 46 is formed as a coaxial air line with an electrically conductive inner pipe and an electrically conductive outer pipe. The coaxial air line is dimensioned such that high-voltage signals can be transmitted reliably. The wave impedance is preferably set to approximately 50 Ω.

A generator-side inductance 47 and a tool-side inductance 48 are shown symbolically in this line 46. These inductances are brought about by the line itself, wherein the length of the respective line sections determines the magnitude of the respective inductance. A tool-side capacitor 49 is connected in parallel with the tool capacitor 15, 16. This capacitor 49 represents the electrical capacitance between the capacitor plate 15 and the housing 35 of the molding tool 3. The tool capacitor 15, 16, the capacitor 49 and the tool-side inductance 48 form a tool oscillating circuit 50.

A generator-side capacitor 51 is connected in series with the generator 18 and the generator-side inductance. The generator-side capacitor 51 and the generator-side inductance 47 form a generator oscillating circuit 52. At least the generator-side capacitor 51 or the generator-side inductance 47 is of variable design, for example by virtue of a capacitor with capacitor plates of variable distance or by virtue of line sections of different length being provided. It is also possible for both the generator-side capacitor 51 and the generator-side inductance 47 to be of variable design. The generator-side capacitor 51 can be provided with a servomotor, during the actuation of which the distance between the two capacitor plates is changed by virtue of, for example, one of the two capacitor plates being moved rectilinearly, wherein both capacitor plates are always parallel to one another, or one of the two capacitor plates being pivoted.

By changing the capacitance of the capacitor 51 or of the inductance 47, the resonant frequency of the generator oscillating circuit 52 can be changed or tuned. If the resonant frequencies of the generator oscillating circuit and of the tool oscillating circuit match, then the maximum electrical power is transmitted from the generator 18 to the tool oscillating circuit 50 and therefore to the tool capacitor 15, 16. By changing the resonant frequency of the generator oscillating circuit 52, the transmission of the electrical power can be controlled in a targeted manner, wherein the stronger the resonant frequencies of the two oscillating circuits 50, 52 differ, the lower the transmitted power. The tuning of the generator oscillating circuit 52 can therefore be used in a targeted manner to set the electrical power introduced into the molding space 14.

In the present exemplary embodiment, the resonant frequency of the generator oscillating circuit 52 is changed. It is equally possible to change the resonant frequency of the tool oscillating circuit 50. This has the same effect with regard to the transmission of the electrical power. However, it is more difficult to provide a variable capacitor or a variable inductance on the tool side than on the generator side.

FIG. 4 shows a set-up for controlling the electrical power supplied to the tool capacitor 15, 16 in a schematically simplified circuit diagram. The generator 18 is connected to the tool capacitor 15, 16. A measuring capacitor 53, the electrical capacitance of which is a fraction of the electrical capacitance of the tool capacitor 15, 16, is connected in parallel with the tool capacitor 15, 16. The measuring capacitor 53 is connected to a voltage measuring device (voltmeter) 55 via a coaxial line 54. Preferably, a diode 56 is connected in parallel with the measuring capacitor 53. The coaxial line 54 is connected in series with an inductance 58, which serves for filtering high-frequency signals.

The measuring unit formed from the measuring capacitor 53 and the diode 56 is separated from the tool capacitor 15, 16 by means of an isolating capacitor 59. The isolating capacitor has a high dielectric strength. The capacitance of the isolating capacitor 59 is smaller than the capacitance of the measuring capacitor 53. As a result, a higher voltage drops across the isolating capacitor than across the measuring capacitor 53. The ratio of the capacitance of the isolating capacitor 59 to the capacitance of the measuring capacitor 53 is preferably 1:100 or 1:1,000 or 1:10,000. As a result, the voltage applied to the tool capacitor 15, 16 in the measuring unit 53, 56 is reduced in such a way that it lies in a measuring range of the voltage measuring device 55 and can be detected reliably by the latter.

In this circuit, a voltage which corresponds to the voltage applied to the tool capacitor 15, 16 and is reduced in accordance with the ratio of the capacitance of the measuring capacitor 53 with regard to the capacitance of the isolating capacitor 59 thus drops across the measuring capacitor 53. As a result of the provision of the diode 56, only the oscillation halves of a specific polarity occur. The diode 56 therefore forms a rectification of the voltage occurring across the measuring capacitor 53. This measuring voltage is measured with the voltage measuring device 55 and converted into a measuring signal. The measuring signal is forwarded to a control device 57 which automatically controls the generator 18 for outputting a predetermined electrical power in order to generate a specific voltage across the tool capacitor or a specific measuring voltage which is a fraction of the voltage across the tool capacitor across the measuring capacitor.

The control device 57 controls the power of the generator 18 on the basis of the measuring voltage. In this case, there may be different target values for the predetermined power to be controlled. On the one hand, the power can be controlled to a specific constant magnitude or, on the other hand, the power can be varied such that the voltage dropped across the measuring capacitor 53 and rectified with the voltage measuring device 55 is substantially constant. In other words, depending on the measuring voltage, on the one hand, the electrical power output or the measuring voltage can be kept constant.

As has been explained at the outset, the absorption capacity of the material to be welded present in the tool capacitor 15, 16 changes depending on the temperature, a particularly strong change in the absorption capacity of the electromagnetic waves occurring in certain processing situations. In the equivalent circuit diagram shown in FIG. 4, the change in the absorption capacity of the electromagnetic waves can also be considered as a change in the capacitance of the tool capacitor 15, 16. This capacitance changed at the tool capacitor 15, 16 leads, depending on whether the control device 57 is designed to keep the electrical power output or the voltage (=voltage amplitude) applied to the tool capacitor 15, 16 constant, either to a change in the voltage (=voltage amplitude) or to a change in the electrical power output.

In principle, it is simpler to output a predetermined constant electrical power by means of the generator 18, because then the tuning of the tool oscillating circuit 50 to the generator oscillating circuit 52 can be kept constant, so that a constant electrical power is output by the generator 18. In this embodiment, the measuring voltage measured by the voltage measuring device 55 can represent a parameter characteristic of the absorption capacity of the material to be welded, which parameter is monitored by the control device 57. If the measuring voltage changes by a predetermined threshold value within a predetermined time interval, this is established by the control device 57 and is assessed as a trigger point for ending the heating process. The heating process can be ended directly with establishment of the trigger point or also delayed by a predetermined period of time. The heating process is ended by switching off the supply of electrical power from the generator 18, wherein the switching off of the generator 18 is controlled by the control device 57.

In a modification of this embodiment, the control device 57 can be designed in such a way that it first derives the measuring voltage according to time. If the signal after the first time derivative of the measuring voltage exceeds a specific threshold value, this means a predetermined abrupt change in the measuring voltage present across the tool capacitor 15, 16, which is in turn assessed by the control device 57 as a trigger point for ending the heating process.

In a further modification of the embodiment, the control device 57 can also be designed in such a way that the second time derivative of the measured voltage is determined. If the second time derivative of the measuring voltage exceeds a specific threshold value, this means a predetermined curvature in the profile of the measuring voltage and thus an abrupt change in the voltage signal. This can also be assessed as a trigger point for ending the heating process.

If the control device 57 is designed in such a way that the electrical power output by the generator 18 is changed in such a way that a substantially constant voltage (=voltage amplitude) drops across the tool capacitor 15, 16, then the entire system reacts to an abrupt change in the absorption capacity of the electromagnetic waves of the material to be welded present in the tool capacitor 15, 16 by a corresponding change in the electrical power. This power could basically be determined by measuring the current output to the tool capacitor 15, 16, since the voltage present across the tool capacitor 15, 16 is already known and is measured by the voltage measuring device 55. The power could then be determined from the corresponding current value and the corresponding voltage value.

However, it is simpler to tap the control signal which is output by the control device 57 and with which the power output of the generator 18 is controlled. This control signal corresponds to the power to be output and a predetermined strong change in the control signal can be assessed as a trigger point for ending the heating process. Since this control signal is present in the control device 57, it can also be monitored simultaneously here.

Different embodiments of how the trigger point is established are also possible here. The control signal can be monitored to the effect whether it changes by a predetermined threshold value within a predetermined time interval, it is equally possible to monitor the first or second derivative to the effect whether they exceed a predetermined threshold value.

Equally, as the trigger point is established (on the basis of the voltage or the power; monitoring of the directly measured signal or the first derivative or the second derivative), the heating process can be ended directly with establishment of the trigger point or can be ended delayed by a predetermined period of time.

This method for automatically determining the duration of the heating of the foam particles for sports apparel, sports equipment or a ball using electromagnetic waves can be carried out individually and again during each production process for producing a particle foam part from foam particles for sports apparel, sports equipment or a ball. Within the scope of the invention, however, it is also possible to use this method for calibrating the duration of the heating of the foam particles for sports apparel, sports equipment or a ball using electromagnetic waves for a specific molding tool and for a specific type or a specific batch of foam particles for sports apparel, sports equipment or a ball. The duration of the heating process until all the foam particles are welded completely to form a particle foam part depends primarily on the molding tool used, which defines the molding space, and on the type used or on the batch of foam particles used.

A production process for producing a particle foam part from foam particles for sports apparel, sports equipment or a ball is referred to as a calibration process, in which the duration of the heating of the foam particles using electromagnetic waves is set individually according to the method explained above, and the duration exerted here for heating the foam particles using electromagnetic waves is detected and stored using a clock or a clock generator. The duration thus determined for heating the foam particles using electromagnetic waves is referred to below as "production time interval".

A single calibration process or a plurality of calibration processes can be carried out, in which the duration of the heating of the foam particles for sports apparel, sports equipment or a ball using electromagnetic waves is detected in each case. If a plurality of heating intervals are detected, they can be evaluated statistically and, for example, the mean value or the median of the detected heating intervals can be kept available as a production time interval for further production processes. In the further production processes, the characteristic parameter is then no longer monitored, but rather the duration of the heating of the foam particles using electromagnetic waves is controlled solely on the basis of the production time interval. The duration of the heating of the foam particles using electromagnetic waves has therefore been calibrated. As a result, the further control is simplified and can be transferred, if appropriate, to further devices for producing particle foam parts which use the same tool and in which the same type or the same batch of foam particles is used for producing the particle foam part. These further devices can be designed with a simple control device which controls the heating process merely on the basis of the production time interval present.

As explained above, a plurality of production time intervals which are each detected using a calibration process can be evaluated statistically. Such a statistical evaluation also makes it possible to determine a quality factor of the production process. If the different production time intervals deviate considerably from one another, then this is a sign that the production process is unstable and particle foam parts of different quality are generated. If, in contrast, the production time intervals are substantially the same, then this means that the production process is stable and particle foam parts are each generated with the same quality. The standard deviation of the production time intervals of the different calibration processes can thus be varied as a quality factor for assessing the quality of the production process if the quality factor indicates a stability of the production process which is too low.

One or more of the following parameters can be varied for optimizing the production process:
- applied power of the electromagnetic waves,
- applied voltage for generating the electromagnetic waves,
- quantity of the heat transfer medium supplied to the molding space,
- quantity of the foam particles supplied to the molding space,
- pressure which is exerted by means of a molding tool on the foam particles before the latter are heated.

The lower the applied power or the applied voltage for generating the electromagnetic waves, the slower the foam particles are heated. The slower they are heated, the better a heat equalization between the different regions of the mold space can take place and the more uniform the welding is generally. Therefore, stabilization of the production process can often be achieved by reducing the power or voltage.

However, in the case of some molding tools, in particular in the case of molding tools having an electrically conductive mold half, heat can be dissipated very well at certain points, whereby certain points of the mold space are cooled more strongly than other points. In contrast, in the case of such molding tools, it may be expedient to heat the foam particles as quickly as possible and to operate the heating of the foam particles with the highest possible power of the electromagnetic waves or with the highest possible applied voltage. In this situation, an increase in the power or the voltage can bring about stabilization of the production process. The quantity of the foam particles located in the mold space and/or the quantity of a binder for combining the foam particles can also have a considerable influence on the stability of the production process, there in turn being cases in which the increase or the reduction in the quantity of foam particles or the quantity of binder leads to stabilization of the production process. This can be recognized by means of the statistical evaluation on the basis of the quality factor and set accordingly.

This optimization can be carried out automatically using an expert system. It can also be based on machine learning, the quality of the particle foam parts produced being detected manually or by means of suitable measuring methods using data technology and being input to the system as feedback, on the basis of which the optimization and learning process can be carried out.

It has been shown that the duration over which the electromagnetic RF radiation is applied depends on the volume of the molding space 14, on the density of the foam particles and on the applied electrical power or the applied electrical voltage. In tests, it has been shown that, depending on the volume and on the material from which the foam particles are formed, about 30 s to about 2 min are required in order to weld the foam particles reliably and completely. In this case, an electrical voltage (=voltage amplitude) of 3 kV to 20 kV is generally applied.

During the welding, the temperature of the foam particles can be measured and the electrical power correspondingly controlled. The electrical power is preferably controlled in such a way that the foam particles have a temperature slightly above their softening temperature.

The surface delimiting the molding space 14 can additionally be temperature-controlled. For this purpose, heating wires 22 can be arranged in the molding tool adjacent to the surface delimiting the molding space 14. The heating wires 22 are connected to a current source 23, by means of which a heating current can be fed into the heating wires.

Instead of heating wires, fluid channels can also be provided in the mold halves 12, 13, through which channels a corresponding temperature-controlled fluid flows. Preferably, the fluid is water or steam.

After the application of the electromagnetic RF radiation, the molding space 14 is kept closed for a stabilization time interval, whereby the heat introduced is distributed uniformly in the particle foam part and very uniform welding is formed between all foam particles. This process step is referred to as stabilization. During stabilization, slight cooling of the particle foam part also takes place. Since the mold halves 12, 13 are formed from a material which is substantially transparent to electromagnetic RF radiation and which is usually a plastic material which conducts heat poorly, basically little heat is output to the outside in the closed molding space 14. Of course, this is different if one mold half is formed from an electrically conductive and therefore highly thermally conductive material.

Mold halves 12, 13 formed from plastic have the advantage over mold halves formed from metal that, on the one hand, they are substantially better thermally insulated and, on the other hand, have a lower heat capacity. As a result, the desired temperature cycles can be carried out substantially more rapidly and with less energy, the heat supplied being supplied almost completely to the foam particles.

During the duration of the stabilization or part of the duration of the stabilization, the capacitor plates 15, 16 can be actively cooled by the cooling device 32, 33, whereby heat is extracted from the main bodies of the mold halves 12, 13 and therefore also from the particle foam part.

After the stabilization, the particle foam part is demolded by virtue of the two mold halves 12, 13 being moved apart. For demolding, demolding plungers can be provided on the molding tool, with which demolding plungers the particle foam part is pushed out of one of the two mold halves 12, 13.

The stabilization is an optional method step. In the case of certain materials and moulds, it can also be omitted. The greater the volume of the particle foam part to be produced, the more expedient it is to stabilize the particle foam part in the molding tool after the welding.

In order to increase the throughput, the electromagnetic RF radiation can already be applied during the filling and/or during the closing of a crack gap.

The electromagnetic radiation, in particular the RF radiation, can already be applied during the filling or else only after the filling of the molding space 14 with foam particles, firstly with low electrical power or low electrical voltage, in order to preheat the material to a certain temperature, in order then to increase the electrical power or electrical voltage gradually or abruptly.

It may also be expedient to increase the power or the voltage of the electromagnetic RF radiation gradually, with the result that a ramp is carried out over a duration of, for example, 30 seconds to 3 minutes as a result of the gradual increase in the electrical power or voltage of the electromagnetic RF radiation. As a result, very uniform heating of the foam particles is achieved.

Optionally, a negative pressure and/or vacuum can also be applied to the molding space 14. This is expedient when the foam particles and/or the compressed air supplied have a certain moisture content.

The method explained above is a dry method in comparison with sole welding with steam. As a result, the particle foam parts produced are dry or more dry after the production process and can be supplied to further processing steps more rapidly. It may also be expedient to demold the warm particle foam parts and to supply them directly to further processing. As a result, substantial increases in efficiency can be achieved in production since, on the one hand, the pauses between individual process steps can be shortened and, on the other hand, the heat introduced for welding the foam particles can also be at least partially used for subsequent method steps.

It may also be expedient to provide a water or steam supply line at the welding station, with which water and/or steam is supplied to the molding tool. This is particularly advantageous when foam particles are to be welded which have only a low dielectric loss factor at low temperatures or generally only a low dielectric loss factor. In such a case, a small quantity of water or steam is supplied. As a result of the electromagnetic radiation, the water is heated to steam or the steam is heated further. As a result, the foam particles are heated to a relatively high temperature at which the dielectric loss factor is greater, whereby they then themselves absorb the electromagnetic radiation and heat up further. It has been shown that a few 100 g of water are sufficient for a molding space having a volume of 50 liters. If the foam particle material is, for example, ePS (expandable polystyrene), 300 g or less of water are sufficient for heating and welding the foam particles in a molding space having a volume of 50 liters. In the case of conventional welding, in which the foam particles are heated solely by means of superheated steam, quantities of steam which comprise a few kilos of water are necessary for a molding space having a volume of 50 liters.

Therefore, if foam particles which absorb electromagnetic radiation only slightly are to be welded, it is basically the case that a single addition of water in a quantity of 300 g is then sufficient for a molding space having a volume of 50 liters. In the case of many materials which absorb electromagnetic radiation only slightly, even smaller quantities of water can be sufficient. In the case of molding spaces having other volumes, the maximum necessary quantity of water can be adapted to the volume in the same ratio.

If water is heated by means of electromagnetic radiation in the molding space, it is expedient to use a molding tool which has a pressure sensor with which the pressure present in the molding space can be measured. This pressure is proportional to the temperature. The irradiation of the electromagnetic radiation is then preferably controlled in accordance with the measured pressure value, i.e., preferably set to a specific pressure value.

### 6. Reference Signs List

- 1: Device
- 2: Material Container
- 3: Molding tool
- 4: Line
- 5: Bottom
- 6: Compressed air line
- 7: Compressed air source
- 8: Drive nozzle
- 9: Compressed air line
- 10: Filling injector
- 11: Compressed air line
- 12: Mold half
- 13: Mold half
- 14: Molding space
- 15: Capacitor plate
- 16: Capacitor plate
- 17: Electrical line
- 18: Generator (such as an alternating voltage source)
- 19: Negative pressure pump
- 20: Fan
- 21: Cooling fin
- 22: heating wires
- 23: current source
- 24: Main body
- 25: Main body
- 26: Inner delimiting surface
- 27: Inner delimiting surface
- 30: Ground
- 31: Base wall
- 32: Side wall
- 33: Filling opening
- 34: Venting opening
- 35: Housing
- 46: Line
- 47: Generator-side inductance
- 48: Tool-side inductance
- 49: Tool-side capacitor
- 50: Tool oscillating circuit
- 51: Generator-side capacitor
- 52: Generator oscillating circuit
- 53: Measuring capacitor
- 54: Coaxial line
- 55: Voltmeter
- 56: Diode
- 57: Control device
- 58: Inductance
- 59: Isolating capacitor

The invention is further described by the following embodiments:
1. A method for producing a particle foam part from foam particles for sports apparel, sports equipment or a ball using electromagnetic waves, comprising the steps of
   - filling a molding space,
   - heating the foam particles with electromagnetic waves to weld them,
   - demolding,
   wherein a parameter characteristic of the absorption of the electromagnetic waves is monitored during the heating of the foam particles, and if this parameter changes by a predetermined amount, the heating of the foam particles is ended.
2. Method according to embodiment 1, characterized in that
   the electromagnetic waves are generated by means of a capacitor in which the molding space is located, wherein
   the electromagnetic waves are applied to the capacitor with a predetermined voltage amplitude, and the power introduced into the molding space or the first or second derivative thereof over time is measured as a characteristic parameter, or
   the electromagnetic waves are applied to the capacitor with a predetermined power, and the voltage dropped across the capacitor or the first or second derivative thereof over time is measured as a characteristic parameter.
3. Method according to embodiment 1 or 2, characterized in that
   after heating and before demolding, the particle foam part is cooled in the molding space.
4. Method according to one of embodiments 1 to 3, characterized in that RF radiation is used as electromagnetic waves, in particular in a frequency range of 30 kHz to 300 MHz.
5. A method for calibrating a process for producing particle foam parts from foam particles for sports apparel, sports equipment or a ball using electromagnetic waves, wherein at least one particle foam part for sports apparel, sports equipment or a ball according to one of embodiments 1 to 4 is produced in a calibration process using a mould which defines a specific molding space and foam particles of a specific material type, and the duration of the heating with electromagnetic waves is measured until the characteristic parameter changes by the specific threshold value, and further particle foam parts for sports apparel, sports equipment or a ball are produced by heating the foam particles with the same settings for supplying the electromagnetic waves in each case for a production heating interval which corresponds to the duration determined with the calibration process.
6. Method according to embodiment 5, characterized in that a plurality of particle foam parts for sports apparel, sports equipment or a ball are produced according to one of the methods according to embodiments 1 to 4 during a calibration process, and the duration of the heating is measured in each case, and the production time interval is determined on the basis of the plurality of durations measured during the calibration process.
7. Method according to embodiment 6, characterized in that the mean value or median of the individual durations is determined as the production time interval.
8. Method according to embodiment 6 or 7, characterized in that only durations which lie within a predetermined multiple of the standard deviation around the mean value or around the median of the measured durations are taken into account for determining the production time interval.
9. Method according to one of embodiments 6 to 8, characterized in that a statistical evaluation of the measured durations is carried out for determining a quality factor of the production process.
10. Method according to embodiment 9, characterized in that the production process is optimized on the basis of the quality factor by varying at least one specific parameter of the production process if the quality factor indicates a stability of the production process which is too low.
11. Method according to embodiment 10, characterized in that
   at least one of the following parameters is varied and then a production time interval is determined again by producing a plurality of particle foam parts for sports apparel, sports equipment or a ball according to a method according to one of embodiments 1 to 4:
   - applied power of the electromagnetic waves,
   - applied voltage for generating the electromagnetic waves,
   - quantity of the heat transfer medium supplied to the molding space,
   - quantity of the foam particles supplied to the molding space,
   - pressure which is exerted by means of a molding tool on the foam particles before the latter are heated.
12. Method according to embodiment 11, characterized in that
   the at least one parameter to be changed and the degree of change are determined automatically by means of an expert system.
13. A device for producing a particle foam part from foam particles for sports apparel, sports equipment or a ball, comprising
   a molding tool which delimits a molding space, wherein at least two capacitor plates are arranged adjacent to the molding space, which capacitor plates are connected to a radiation source for electromagnetic radiation, wherein the radiation source for electromagnetic radiation is designed to emit electromagnetic radiation, and
   the device has a control device which is designed in such a way that the device automatically carries out a method according to one of embodiments 1 to 12.
14. A particle foam part from foam particles for sports apparel, sports equipment or a ball, which has been produced according to a method according to one of embodiments 1 to 4.
15. The particle foam part according to the preceding embodiment, wherein the particle foam part is a shoe sole or a part of a shoe sole, in particular a midsole or a part of a midsole.
16. Shoe, in particular a sports shoe, comprising a shoe sole or a midsole according to the preceding embodiment.

## Claims

1. A method for producing a particle foam part from foam particles for sports clothing, sports equipment or a ball using electromagnetic waves, comprising the steps of
- filling a mold space,
- heating the foam particles with electromagnetic waves to weld them,
- demolding,
wherein during the heating of the foam particles a parameter characteristic for the absorption of the electromagnetic waves is monitored and if it changes by a predetermined amount, the heating of the foam particles is terminated.

2. The method according to claim 1,
**characterised in that** the electromagnetic waves are generated by means of a capacitor in which the mold space is located, wherein the electromagnetic waves are applied to the capacitor with a predetermined voltage amplitude and as characteristic parameter the power introduced in the mold space or its first or second derivative over time is measured, or the electromagnetic waves are applied to the capacitor with a predetermined power and as characteristic parameter the voltage dropping at the capacitor or its first or second derivative over time is measured.

3. The method according to claim 1 or 2,
**characterised in that** after the heating and before the demolding the particle foam part is cooled in the mold space.

4. The method according to any one of claims 1 to 3,
**characterised in that** RF radiation is used as the electromagnetic waves, in particular in a frequency range of 30 kHz to 300 MHz.

5. A method for calibrating a process for producing particle foam parts from foam particles for sports clothing, sports equipment or a ball using electromagnetic waves, wherein at least one particle foam part for sports clothing, sports equipment or a ball according to any one of claims 1 to 4 is produced in a calibration process with a mould defining a specific mould space and foam particles of a specific material type and the time period of the heating with electromagnetic waves is measured until the characteristic parameter changes by the specific threshold value and further particle foam parts for sports clothing, sports equipment or a ball are produced by heating the foam particles with the same settings for supplying the electromagnetic waves in each case for a production heating interval corresponding to the time period determined with the calibration process.

6. The method according to claim 5,
**characterised in that** during a calibration process a plurality of particle foam parts for sports clothing, sports equipment or a ball are produced according to any one of the methods according to claims 1 to 4 and in each case the time period of the heating is measured and the production time interval is determined on the basis of the plurality of time periods measured during the calibration process.

7. The method according to claim 6,
**characterised in that** the mean value or median of the individual time periods is determined as the production time interval.

8. The method according to claim 6 or 7,
**characterised in that** for determining the production time interval only time periods are taken into account which lie within a predetermined multiple of the standard deviation around the mean value or around the median of the measured time periods.

9. The method according to any one of claims 6 to 8,
**characterised in that** for determining a quality factor of the production process a statistical evaluation of the measured time periods is carried out; and **in that** the production process is optimised on the basis of the quality factor **in that** at least one specific parameter of the production process is varied if the quality factor indicates too low a stability of the production process.

10. The method according to claim 9,
**characterised in that**
at least one of the following parameters is varied and then a production time interval is again determined by producing a plurality of particle foam parts for sports clothing, sports equipment or a ball according to a method according to any one of claims 1 to 4:
- applied power of the electromagnetic waves,
- applied voltage for generating the electromagnetic waves,
- quantity of the heat transfer means supplied to the mould space,
- quantity of the foam particles supplied to the mould space,
- pressure which is exerted on the foam particles by means of a mould before heating them.

11. The method according to claim 10,
**characterised in that**
the at least one parameter to be changed and the degree of change are automatically determined by means of an expert system.

12. A device for producing a particle foam part from foam particles for sports clothing, sports equipment or a ball comprising
a mould delimiting a mold space, wherein at least two capacitor plates are arranged adjacent to the mold space and are connected to a radiation source for electromagnetic radiation, wherein the radiation source for electromagnetic radiation is designed to emit electromagnetic radiation, and
the device has a control device which is designed such that the device automatically carries out a method according to any one of claims 1 to 11.

13. A particle foam part from foam particles for sports clothing, sports equipment or a ball, which has been produced according to a method according to any one of claims 1 to 4.

14. The particle foam part according to the preceding claim, wherein the particle foam part is a shoe sole or a part of a shoe sole, in particular a midsole or a part of a midsole.

15. A shoe, in particular a sports shoe, comprising a shoe sole or a midsole according to the preceding claim.
